# EUROPEAN PATENT SPECIFICATION

(11) **EP 0 520 523 B1**
(45) Date of publication and mention of the grant of the patent: **26.06.1996**
(21) Application number: 92200587.1
(22) Date of filing: 02.03.1992
(51) Int. Cl.: B60J 7/02

(54) **Open roof construction for a vehicle**
Schiebedachkonstruktion für Fahrzeuge
Construction de toit ouvrant pour véhicule

(30) Priority: 27.06.1991 NL 9101111
(43) Date of publication of application: 30.12.1992
(73) Proprietor: VERMEULEN-HOLLANDIA OCTROOIEN II B.V., NL-2031 EB Haarlem (NL)
(72) Inventor: Huyer, Johannes Nicolaas, NL-1991 BN Velserbroek (NL)
(74) Representative: de Bruijn, Leendert C.

(56) References cited:
- EP-A- 0 363 912
- DE-A- 3 336 614
- DE-A- 3 532 103
- DE-A- 3 640 168
- DE-A- 3 831 045
- DE-C- 4 014 487

## Description

The present invention relates to an open roof construction for a vehicle according to the preamble of claim 1.

Such open roof construction is known from DE-A-35 32 103.

It is an object of the present invention to provide an improved open roof construction.

For this purpose the open roof construction according to the invention has the features of the characterizing portion of claim 1.

This results in a very good and low cost structure for guiding the drive cables, because the plastic guide tube provides a proper low friction guiding for the drive cables, while the drive forces of the drive cables are favourably absorbed by the support means of the frame.

A particular embodiment of the invention is defined in claim 5, resulting in a low weight and low cost frame in which the support means for the guide tubes can easily be integrated.

A further embodiment of the open roof construction according to the invention is characterized in that there is provided a plastic insert in the section parts of the side rails, which serves as guide for adjusting means of the open roof construction.

Such a plastic insert for guiding the adjusting means may provide a wear resistant guide having a low coefficient of friction with the right choice of material. This plastic insert also allows the integration of stationary guide `parts therein avoiding loose parts or additional manufacturing steps. The plastic insert principally does not have to provide stiffness if it is ensured that the insert is well supported by the section parts of the side rails of the frame so that the frame provides the stiffness. In any case, there is provided a guide for the adjusting means of the closure element of the open roof construction, of which the cost price can be very low.

The invention will hereafter be further described with reference to the drawing showing an embodiment of the invention by way of example.

Fig. 1 is a very schematic perspective view of a vehicle roof including an embodiment of the open roof construction according to the invention.

Fig. 2 is an enlarged and more detailed perspective view of the frame of the open roof construction of fig. 1.

Fig. 3 is an enlarged sectional view along the line III-III of fig. 2.

Fig. 4 is an enlarged view in the direction of arrow P in fig. 2.

Fig. 5 and 6 are enlarged sectional views along the line V-V and VI-VI, respectively, of fig. 2.

Fig. 7 is an enlarged sectional view along the line VII-VII of fig. 2 including added guide parts.

Fig. 8 and 9 show in a transverse sectional view a plastic section part made by injection moulding, in a condition immediately after moulding, and bent into the operational shape, respectively.

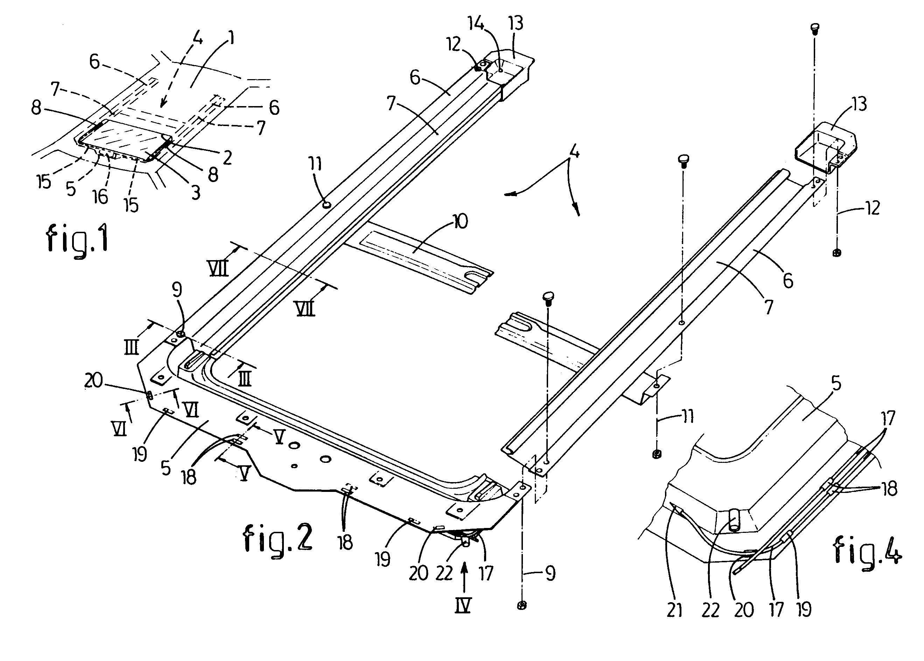

Fig. 1 shows the fixed roof 1 of a passenger car which is provided with an open roof construction. For this purpose the fixed roof 1 has a roof opening 2 therein which, in this case, may be selectively closed or opened by means of a transparent rigid panel 3 of the open roof construction. Of course the transparent panel 3 may be replaced by other closure elements, such as a metal panel, a foldable closure element or a closure element built up of segments. The panel 3 is adjustably supported by a frame 4 which is fixed to the underside of the fixed roof 1 of the car. The frame 4 comprises a transverse front beam 5 extending near the front edge of the roof opening 2, and side rails 6 connecting to the ends of the front beam and extending in longitudinal direction of the car below the side edges of the roof opening 2. Within these side rails there are formed guides 7 for movably receiving adjusting means 8 which are adapted to support and adjust the panel 3. In the embodiment shown, these adjusting means 8 can at least slide the panel 3 backwardly below the fixed roof 1 and may possibly also cause it to pivot outwardly.

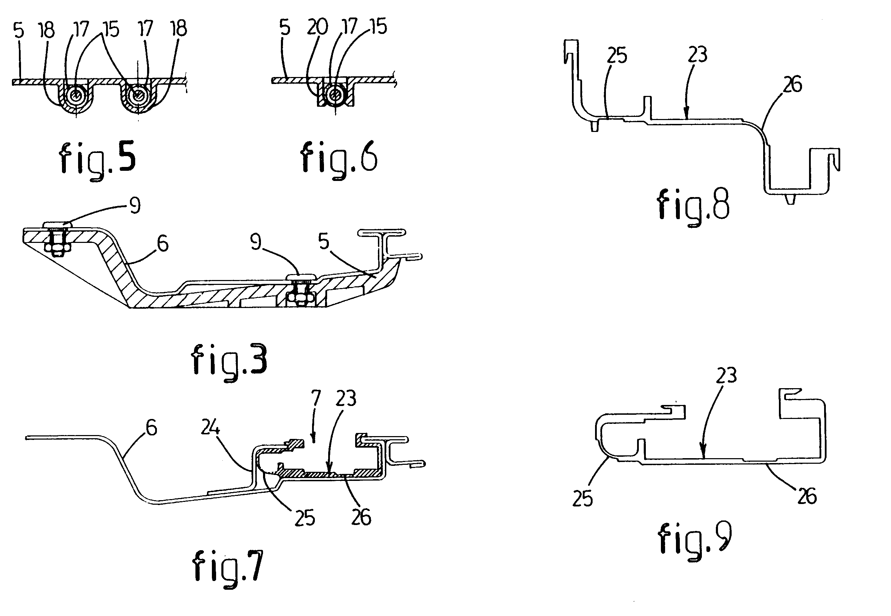

Fig. 2 shows the frame 4 on a larger scale and in more detail. It is immediately visible that the side rails 6 and the front beam 5 consist of separate parts. The front beam 5 is a plastic injection moulded part offering the advantage of a low weight and the allowance of integration of many stationary parts and auxiliary means. Furthermore, the design of the front beam 5 may be varied to a large extent and is therefore easily adaptable to design requirements of automotive manufacturers. The side rails 6, however, are formed by steel rolled sections offering low cost manufacturing and allowing an easy adaptation of their length in view of the type of car in which the open roof construction should be mounted. The side rails 6 are attached at their front end to the front beam 5 by means of bolt-nut connections 9 (see also fig. 3). Of course, also other connections, such as rivet connections or the like, may be used. A transverse beam 10 spaced rearwardly from the front beam 5 interconnects the side rails 6 and is attached thereto by a bolt-nut connection 11. This transverse beam 10 serves to stiffen the frame 4 and may desirably be utilized for the attachment of the canopy of the interior of the vehicle at the position of the rear edge of the roof opening 2. Plastic corner pieces 13 are mounted on the rear ends of the side rails 6 by means of bolt-nut connections 12. Water discharge pipes 14 may be integrated in said corner pieces 13 in order to discharge any leakage water from the side rails 6.

For driving the adjusting means 8 under the panel 3 there are provided in this embodiment by way of example two pressure resistant flexible drive cables 15 (fig. 1, 5 and 6) extending between both adjusting means 8 and an electric motor 16 which, in this case, is mounted in the centre below the front beam 5, wherein an inoperative portion of the drive cables 15 extends beyond the electric motor 16. The length of this inoperative position depends on the position of the adjusting means 8 within their guides 7. For guiding the drive cables 15 the invention provides thin plastic, for example nylon, guide tubes 17. Although these plastic guide tubes 17 offer a wear resistant low friction guide for the drive cables 15, this guide tube 17 is not sufficiently stiff to absorb the drive forces of the drive cables 15, in particular in the curved portion of the drive cables 15 (fig. 4). Consequently, the invention proposes to support the plastic guide tubes 17 in several positions by the frame 4, so that the drive forces of the drive cables 15 may be absorbed by the frame. In the embodiment shown by way of example and including the plastic front beam it may be realized very easily by integrating holding or mounting means into the front beam 5, as is shown at 18, 19 and 20. The holding members 18 and 19 have a passage through which the guide tube 17 may be threatened, while the guide members 20 are constructed as snap members in which the guide tubes 17 may be pushed from outside. At 21 there is formed a passage opening in the front beam 5 of the frame for passing the guide tube 17 containing the drive cable 15 through the front beam 5, this passage opening 21 of course also serving as holding member. Fig. 4 shows that the holding members 18-21 provide a stable support for the guide tube 17. Fig. 4 also shows the end of the inoperative portion of the other drive cable 15 and guide tube 17. It is also shown in fig. 4 that the front beam 5 of the frame 4 has an integral water discharge pipe 22.

Fig. 7 shows the guide 7 in one of the side rails 6 of the frame 4 in more detail. As mentioned earlier, this guide 7 serves for guiding the adjusting means 8 for the panel 3. These adjusting means 8 may be constructed in the most varied manners and may also include glide shoes. These glide shoes should be slidably guided in longitudinal direction of the side rails 6, but should be confined in other directions. Furthermore, it may be the case that certain parts of the adjusting means 8 are actuated by means of members incorporated within the guide 17, such as pins, cams, slots and the like. According to the invention this can be realized in a simple manner by means of a plastic insert 23 in which said means are integrated, but wherein this insert is supported by parts of the side rail 6 and consequently it does not have to absorb forces. Fig. 7 shows the side rail 6 being provided with an additional section 24 supporting the insert 23 on one side. In the manner shown the insert 23 is solidly surrounded by the side rail 6. In the longitudinal direction of the side rail 6, the insert 23 should of course be locked so that a relative sliding movement is prevented.

According to the invention, the insert 23 can be manufactured as an injection moulded part, also when there are projections which do not extend the full length. Fig. 8 and 9 show the manner of how to obtain this. Referring to fig. 8, there is designed a section which can be formed between an upper and lower mould so as to be relieved in vertical direction. This relieved section comprises two slightly thinner bending points 25 and 26 where the plastic section may be easily bent into the non-relieved operational shape as insert 23, as shown in fig. 9. In this manner the design of the section is substantially unhindered without preventing it from being injection moulded. Of course the bending points 25 and 26 may be shaped in other ways.

As will be clear from the foregoing there is provided an open roof construction of which the frame may be manufactured at low cost, low weight and nonetheless with an extensive freedom of design.

The invention is not restricted to the embodiment shown in the drawing by way of example, which can be varied in different manners within the scope of the invention as defined by the claims. It is for instance possible to provide the transverse beam made from plastic and carrying the drive means at the rear side of the frame, so that the transverse beam extends at the rear side of the roof opening. On the front side of the frame can then be formed a more simple transverse connection made of plastic or metal and serving as watergutter or for receiving a wind deflector, for example. Furthermore, the front beam may be manufactured by pressing thermosetting plastic, such as SMC, rather than by injection moulding of a thermoplastic.

## Claims

1. Open roof construction for a vehicle, comprising a frame (4), a movable roof element (3), adjusting means (8) for supporting and moving the roof element (3), actuating means (16) for actuating the panel (3), and a flexible drive cable (15) between the actuating means (16) and the adjusting means (8), which drive cable (15) runs within a guide tube (17) having a curved portion, **characterized** in that at least the curved portion of the guide tube (17) is formed of a flexible low friction wear resistant plastic material unable to absorb the drive forces of the drive cable (15), the frame being provided with support means (18-21) to support the guide tube in several positions in the curved portion.

2. Open roof construction according to claim 1, wherein the plastic material of the guide tube (17) is nylon.

3. Open roof construction according to claim 1 or 2, wherein the support means (18-21) include holding members (18-20) provided on the frame (4).

4. Open roof construction according to one of claims 1-3, wherein the support means (21) are integrated in the frame (4).

5. Open roof construction according to one of claims 1-4, wherein the frame (4) is provided with a transverse beam (5) made of plastic material, and with longitudinal side rails (6) formed of metal sections which are attached to the respective ends of the transverse beam (5).

6. Open roof construction according to claim 5, wherein the metal sections for the side rails (6) are rolled steel sections.

7. Open roof construction according to one of the preceding claims, wherein there is provided a plastic insert (23) in the section parts of the side rails (6), which serves as guide for adjusting means (8) of the open roof construction.

## Patentansprüche

1. Dachöffnungskonstruktion für ein Fahrzeug, die einen Rahmen (4), ein bewegliches Dachelement (3), Verstellmittel (8) zum Abstützen und Bewegen des Dachelements (3), Antriebsmittel (16) zum Antreiben der Platte (3) und ein flexibles Antriebskabel (15) zwischen den Antriebsmitteln (16) und den Verstellmitteln (8) aufweist, welches Antriebskabel (15) innerhalb eines Führungsschlauchs (17) verläuft, der einen bogenförmigen Teil aufweist, dadurch gekennzeichnet, daß zumindest der bogenförmige Teil des Führungsschlauches (17) von einem elastischen reibungsarmen verschleißfesten Kunststoffmaterial gebildet wird, das nicht in der Lage ist, die Antriebskräfte des Antriebskabels (15) aufzunehmen, wobei auf dem Rahmen Abstützmittel (18 - 21) vorgesehen sind, um den Führungsschlauch an verschiedenen Stellen des bogenförmigen Teils abzustützen.

2. Dachöffnungskonstruktion nach Anspruch 1, wobei das Kunststoffmaterial des Führungsschlauchs (17) Nylon ist.

3. Dachöffnungskonstruktion nach einem der Ansprüche 1 und 2, wobei die Abstützmittel (18 - 21) Halteteile (18 - 20) aufweisen, die an dem Rahmen (4) vorgesehen sind.

4. Dachöffnungskonstruktion nach einem der Ansprüche 1 bis 3, wobei die Abstützmittel (21) in den Rahmen (4) integriert sind.

5. Dachöffnungskonstruktion nach einem der Ansprüche 1 bis 4, wobei der Rahmen (4) einen Querbalken (5) aus Kunststoffmaterial und längsgerichtete seitliche Schienen (6) aufweist, die aus Metallprofil geformt sind und jeweils an einem Ende des Querbalkens (5) angebracht sind.

6. Dachöffnungskonstruktion nach Anspruch 5, wobei die Metallprofile für die Seitenschienen (6) Stahl-Walzprofile sind.

7. Dachöffnungskonstruktion nach einem der vorstehenden Ansprüche, wobei für die Profilteile der Seitenschienen (6), die als Führung für die Verstellmittel (8) der Dachöffnungskonstruktion dienen, eine Kunststoffeinlage (23) vorgesehen ist.

## Revendications

1. Constrution de toit ouvrant pour un véhicule, comportant un bâti (4), un élément de toit mobile (3), des moyens de réglage (8) destinés à supporter et à déplacer l'élément de toit (3), des moyens d'actionnement (16) destinés à actionner le panneau (3), et un câble flexible (15) d'entraînement entre les moyens d'actionnement (16) et les moyens de réglage (8), lequel câble (15) d'entraînement se déplace à l'intérieur d'un tube (17) de guidage ayant un tronçon courbé, caractérisée en ce qu'au moins le tronçon courbé du tube (17) de guidage est formé d'une matière plastique flexible à faible frottement, résistant à l'usure, incapable d'absorber les forces d'entraînement du câble (15) d'entraînement, le bâti étant pourvu de moyens (18-21) de support destinés à supporter le tube de guidage en plusieurs positions dans le tronçon courbé.

2. Construction de toit ouvrant selon la revendication 1, dans laquelle la matière plastique du tube (17) de guidage est un Nylon.

3. Construction de toit ouvrant selon la revendication 1 ou 2, dans laquelle les moyens (18-21) de support comprennent des éléments (18-20) de maintien situés sur le bâti (4).

4. Construction de toit ouvrant selon l'une des revendications 1-3, dans laquelle les moyens (21) de support sont intégrés dans le bâti (4).

5. Construction de toit ouvrant selon l'une des revendications 1-4, dans laquelle le bâti (4) est pourvu d'une traverse (5) réalisée en matière plastique, et de rails latéraux longitudinaux (6) formés de profilés métalliques qui sont fixés aux extrémités respectives de la traverse (5).

6. Construction de toit ouvrant selon la revendication 5, dans laquelle les profilés métalliques pour les rails latéraux (6) sont des profilés d'acier laminé.

7. Construction de toit ouvrant selon l'une des revendications précédentes, dans laquelle un élément rapporté (23) en matière plastique est prévu dans les parties profilées des rails latéraux (6), lequel sert de guide pour des moyens de réglage (8) de la construction de toit ouvrant.
